# EUROPEAN PATENT APPLICATION

(11) **EP 4 844 614 A1**
(43) Date of publication of application: **25.11.2026**
(21) Application number: 25182769.7
(22) Date of filing: 13.06.2025
(51) Int. Cl.: G06F 21/62

(54) **AI-BASED ADVISORY SYSTEM FOR REAL-TIME EVALUATION**

(30) Priority: 21.05.2025 EP 25178070
(71) Applicant: AI Square Group, 1742 Ternat (BE)
(72) Inventor: VAN DER CRUYS, Peter, 1742 Ternat (BE); WAUTERS, Wim, 1742 Ternat (BE); CEUPPENS, Gerben, 1742 Ternat (BE)
(74) Representative: Patentales BV

(57) **Abstract**

The invention provides, amongst other aspects, a computer-implemented method for real-time querying of information regarding physical entities, the method comprising the steps of receiving a query comprising an identification of at least one technical feature; extracting, from the query, said identification of the technical feature; generating, from a trained Al model being trained based on training data comprising physical entity data relating to a plurality of physical entities each associated with one or more features including the technical feature structured output data comprising a selection of one or more respective physical entities along with respective scores indicative of an association between the feature and each physical entity; calculating, based on the structured output data a result comprising at least the selection of physical entities along with their respective scores.

## Description

### Field of the invention

The present invention relates to methods, devices and systems for automatically querying of information backed by AI in domains such as insurance, real estate, financial services, HR & payroll, legal, notarial, and accounting. Particularly, the invention relates to AI models and, in some embodiments, RAG, for automated generation of advice based on input data that is preferably anonymized and vectorized.

### Background art

Insurance, real estate, financial services, HR & payroll, legal, notarial, and accounting are all domains in which clients rely heavily on expert advice to navigate complex, regulated offerings.

In the insurance industry, policy selection and underwriting decisions hinge on sensitive personal and risk-related data, which must be handled in strict compliance with privacy laws. In real estate, buyers and sellers depend on confidential property valuations, neighborhood analyses, and financial histories to make informed decisions. Financial services firms require the secure handling of transaction records, credit scores, and investment portfolios when recommending banking products, loans, or wealth-management strategies. HR & payroll functions process highly personal employee data-such as salaries, tax identifiers, and benefits elections-which complicates automated benefit-plan comparisons and payroll optimizations. Similarly, legal professionals manage privileged communications, case files, and client identities when advising on contracts or litigation, while notaries deal with authenticated, legally binding documents. Accounting practitioners handle proprietary financial statements, audit evidence, and tax filings under confidentiality obligations.

Despite the pervasive need for guidance in these fields, existing digital tools offer only rudimentary support-such as rule-based wizards or manually configured questionnaires-that fail to scale to the nuanced, data-driven analyses experts perform. Confidentiality requirements often preclude the use of cloud-based, shared databases or third-party analytics platforms, leaving firms reliant on bespoke, in-house solutions that are expensive to develop and maintain. Moreover, conventional software lacks the capability to generalize across diverse product lines and regulatory regimes, making it impossible to provide real-time, personalized recommendations without extensive human oversight.

US20240281891A1 and US12008657B2 disclose related methods yet are overly complex and lack adequate features for performing the tasks in said domains.

The present invention aims at addressing issues of automation in these domains, such as the issues mentioned above.

### Summary of the invention

According to a first aspect, the present invention provides a computer-implemented method for real-time querying of information regarding physical entities, the method comprising the steps of:
- receiving a query comprising an identification of at least one technical feature;
- extracting, from the query, said identification of the technical feature;
- generating, from a trained AI model being trained based on training data comprising physical entity data relating to a plurality of physical entities each associated with one or more features including the technical feature structured output data comprising a selection of one or more respective physical entities along with respective scores indicative of an association between the feature and each physical entity;
- calculating, based on the structured output data a result comprising at least the selection of physical entities along with their respective scores.

In preferred embodiments, the AI model being trained relates to anonymizing and vectorizing physical entity data into a plurality of vectors.

In preferred embodiments, the generating of the structured output data from the trained AI model relates to matching the identification of the technical feature in the query with the respective vectors based on similarity between the identification and one or more entries in the vectors.

The method of the invention advantageously provides real-time querying. This may relate to the AI model being pretrained, so that inference may be done in seconds (during the operational phase), without having to process the physical entity data (already done in the training phase). This said, in embodiments, the operational phase and the training phase may overlap, wherein new data comprised in the query and/or new data from retrieval from an external source (e.g. in embodiments involving a RAG) may be "added" as training data and used for training the AI model.

The method of the invention may provide advice to a user entering the query, where the result amounts to an evaluation sought by the user. Accordingly, it provides a user with an advisory system yielding an evaluation of the query.

According to a second aspect, the invention provides a device for real-time querying of information regarding physical entities, the device comprising
- a network interface configured to receive a query comprising an identification of at least one technical feature;
- an extraction module configured to extract, from said query, said identification of said technical feature;
- a memory module storing a trained AI model, the trained AI model having been trained on physical entity data relating to a plurality of physical entities each associated with one or more features including said technical feature;
- a generation module configured to generate from the trained AI model structured output data comprising a selection of one or more respective physical entities and respective scores indicative of an association between said technical feature and each selected physical entity;
- an output interface for connecting to a calculation module configured to calculate based on the structured output data a result comprising at least said selection of physical entities along with their respective scores.

In preferred embodiments, the AI model being trained relates to anonymizing and vectorizing physical entity data into a plurality of vectors. In preferred embodiments, the generating of the structured output data from said trained AI model relates to matching of the identification of the technical feature comprised in the query with the plurality of respective vectors based on similarity between said identification and one or more entries in the respective vectors.

In preferred embodiments, the device comprises, or is, a RAG application involving a RAG. In preferred embodiments, the device comprises, or is, an application that may be applied in a software-as-a-service context, e.g., as a web platform with a GUI and/or as an online service interacting with external parties via an API.

According to a further aspect, the invention provides a system for real-time querying of information regarding physical entities, the system comprising:
- a system input interface;
- the device of the invention, the device comprising an output interface and a trained AI model trained based on training data;
- a calculation module configured to connect to said output interface and configured to calculate based on structured output data a result comprising at least a selection of physical entities along with their respective scores;
- an extraction module for extracting, from physical entity data provided to the system via the system input interface, a plurality of physical entities comprising personal information;
- a pre-processing module for pre-processing said plurality of physical entities for obtaining anonymized physical entity data comprising a plurality of anonymized physical entities;
- a training data interface for adding, as part of said training of said AI model, said plurality of anonymized physical entities to said training data.

Preferably, the system comprises a user interface module configured to output, preferably via a GUI, the result.

In preferred embodiments, the system comprises, or is, an application that may be applied in a software-as-a-service context, e.g., as a web platform with a GUI and/or as an online service interacting with external parties via an API.

Preferred embodiments and their advantages are provided in the description and the dependent claims.

### Brief description of the drawings

The present invention will be discussed in more detail below, with reference to the attached drawings.

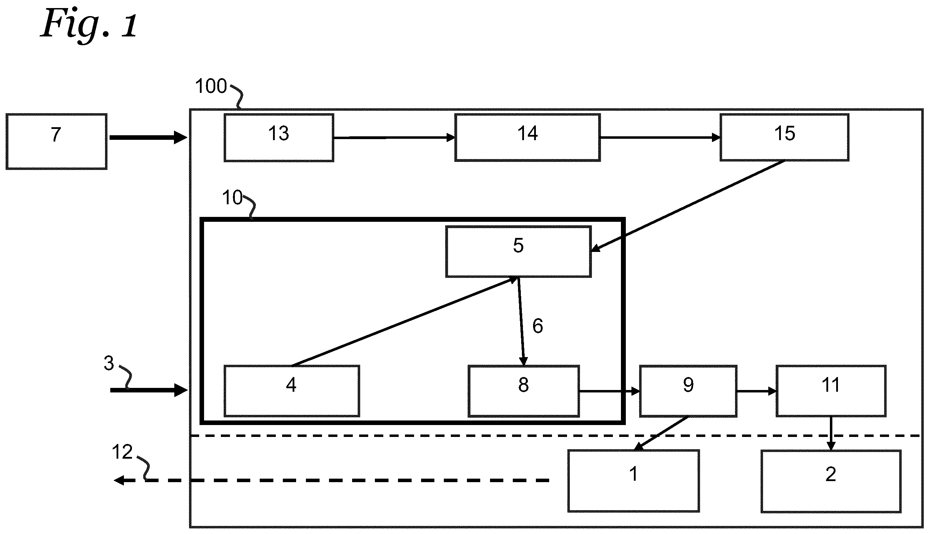

Fig. 1 illustrates an example embodiment according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "vector" has the common meaning in the context of AI algorithms; it is interchangeable with an n-tuple, i.e. a sequence of a finite length n. Such vector of n-tuple is an ordered list of n entries, each entry comprising a data object. The data object may relate to any quantity or digital sequence, e.g., a string of digital characters, a text label, a number, a real value, represented e.g., as a floating point quantity or an ASCII string or a unicode string, etc.

In this document, the term "AI model" may relate to any combination of algorithm and data that has been configured to recognize patterns, make predictions, or generate outputs based on data it has processed during a training phase. AI stands for artificial intelligence and ML stands for machine learning. Thereby, while the skilled person appreciates that there may be a nuance between AI and ML, the terms "AI model" and "ML model" are used interchangeably in this document, both being umbrella terms for the same generic class of models. In a broad, non-limiting sense, the term "AI model" refers to any algorithmic structure-from simple decision trees and linear regressions to complex neural networks and probabilistic graphical models-that encodes relationships between inputs and desired outcomes. It may include pretrained weights, learned parameters, and internal representations that capture statistical regularities in the training data, but is not limited to any specific architecture, scale, or application domain. The AI model of the invention can be deployed to classify information, recommend actions, synthesize new content, or control autonomous systems, and may, in embodiments, comprise further submodels relating to adaptation, fine-tuning, or extension of the AI model.

In this document, a "media-to-text operation" is an umbrella term for any type of automated processing that derives, from a portion of media data, a text string that relates to the contents of the media data. Examples of media-to-text operations are alt text generation, OCR, speech-to-text, automated subtitling, and any type of automated annotation of a portion of media data relating to audio, video, or any related visual or auditory representation. Thereby, "alt text generation" may relate to extracting physical entities and/or technical features from physical entity data. In embodiments, this may relate to a portion of media data comprising an image or belonging to an image, e.g., a bitmap or any other pixel map comprising an array of pixels. In embodiments, this may relate to a portion of media data comprising video data or belonging to a video, e.g., a sequence of bitmaps or any other pixel maps each comprising an array of pixels. Thereby, alt text generation may automatically generate one or more keywords relating to the scene depicted by the pixels. This may relate to, e.g.: any words or sentences describing the color or contrast of the image; any object or person detected in the scene; text information relating to a product or service in a specific domain.

In this document, the term "physical entity data" is an umbrella term for any data directly or indirectly representing and/or comprising data referring to physical entities. Without being limited thereto, physical entities may relate, e.g., to documents, pdf, excel, word, txt, images, video, etc. Without being limited thereto, physical data values may relate to, e.g., any or any combination of text data and multimedia data, such as text strings, movies, audio data of movies, video data of movies, audio data of audio recordings, text strings extracted from subtitles present in movies, text strings extracted from audio data by means of speech-to-text. Thereby, a technical feature and its identification may be straightforward. For instance, a technical feature may be that a human is present on an image, and an identification thereof may be the statement, e.g., in text, that a human is present. However, the relevant technical feature may be anything that is automatically anonymized and vectorized from the physical entity data, and may, e.g., relate to a product or service in a specific domain. Thereby, in embodiments, a similarity may be proportional to the extent that the respective physical entity is associated with the identified technical feature. Thereby, in embodiments, the query may have the same format as the physical entities. Likewise, in embodiments, the result may have the same format as the physical entities and may, e.g., relate to a selection of physical entities present in the query that are similar to physical entities present in the physical entity data, and/or a selection of (anonymized) physical entities present in the physical entity data and similar to one or more physical entities present in the query. Thereby, post-processing of the structured output data may involve selecting only physical entities with score above a certain threshold and only returning those physical entities (i.e., without returning the associated scores). For instance, this may relate to image-only output. In embodiments, the physical entity data, or both the physical entity data and the query and the result, may relate to image-only input and/or an image-only result, with images being, e.g., a 2D bitmap of RGB pixels or similar (e.g., a jpeg, heic or png file). The physical entities and queries may relate to persons, services or products relating to domains such as real estate, financial services, insurance, hr & payroll, legal, notarial and accounting. Thereby, in example embodiments relating to one or more specific example domains, specific AI agents may be provided as submodels of the AI model for those domains.

In this document, the term "RAG" (retrieval augmented generation) is an umbrella term for any architecture or system that combines retrieval of external information with generative capabilities, preferably by first querying the trained AI model, and optionally an external source, more preferably a knowledge graph configured for the specific application domain and the trained AI model, and optionally an external source, to then condition the generative submodel comprised in the AI model on the retrieved context to produce more accurate, up-to-date, or relevant outputs. The external source may relate to the internet or to an external data source reachable via, e.g., an API.

In this document, the term "LLM" stands for "Large Language Model" and is an umbrella term for any advanced neural network-based system trained on vast corpora of text data to understand, generate, and manipulate human language. Without being limited thereto, LLMs encompass transformer architectures and their variants.

The need for the invention may be appreciated from the consideration that transformation and AI automation constitute the core of business optimization. So, the need for real-time, adaptive financial monitoring is increasingly urgent. The solution offered by the invention may enable an integrated, Al-driven framework that continuously evaluates, monitors, and optimizes the alignment between financial products and corporate requirements. It enables an advanced system architecture with functional components and AI integration suitable for application within a B2B context. It may enable organizations that adopt the system to strategically deploy AI agents as digital employees. It may enable decision making based on real-time data validation and simulation, greatly increased speed in risk assessment and compliance checks, and streamlined internal processes and external communications through agent integration. It may enable a shift from static financial analysis to an adaptive, autonomous decision-making structure, representing intelligent automation.

In embodiments, the system is provided with an advanced Financial Intelligence Layer, composed of four core functionalities: a Score Engine, a Report Generator, a Conversational AI Module, and a Metrics Dashboard. In such embodiments, the system is supported by an Al-middleware layer called AIDA (AI Data Agency). Reference is made to Examples 4-6.

In embodiments, the system comprises an Al-middleware layer called AIDA (AI Data Agency), or, equivalently, an AIDA module, which may correspond to any or any combination of the extraction module, the generation module, the calculation module, the system extraction module, the pre-processing module and the user interface module. AIDA may thereby provide a multi-agent system composed of seven domain-specific autonomous agents, each with embedded domain knowledge and access to structured and unstructured financial data. These agents may act as virtual experts in at least two, preferably each, of the following domains: Real Estate AI Agent (real estate broker), Financial Services AI Agent (banker), Insurance AI Agent (insurance broker), HR & Payroll AI Agent (HR manager), Legal AI Agent (lawyer), Notarial AI Agent (notary), Accounting AI Agent (accountant), Audit AI Agent (auditor). These agents may operate according to multi-agent reinforcement learning principles and continuously optimize their decision algorithms based on feedback loops from the user environment. Reference is made to Examples 4-6.

In embodiments, the system comprises a score engine, which may correspond to any or any combination of the extraction module, the generation module, the calculation module, the system extraction module, the pre-processing module and the user interface module. Reference is made to Examples 4-6.

In embodiments, the system comprises a report generator, which may correspond to any or any combination of the extraction module, the generation module, the calculation module, the system extraction module, the pre-processing module and the user interface module. Reference is made to Examples 4-6.

In embodiments, the system comprises a conversational AI module (e.g., a chatbot interface), which may correspond to any or any combination of the extraction module, the generation module, the calculation module, the system extraction module, the pre-processing module and the user interface module. Reference is made to Examples 4-6.

In embodiments, the system comprises a metrics dashboard, which may correspond to any or any combination of the extraction module, the generation module, the calculation module, the system extraction module, the pre-processing module and the user interface module. Reference is made to Examples 4-6.

In embodiments, the system comprises AI trackers, which may correspond to any or any combination of the extraction module, the generation module, the calculation module, the system extraction module, the pre-processing module and the user interface module. Reference is made to Examples 4-6.

In embodiments, the system comprises AI tracers, which may correspond to any or any combination of the extraction module, the generation module, the calculation module, the system extraction module, the pre-processing module and the user interface module. Reference is made to Examples 4-6.

In embodiments, the system comprises integration with external expert systems, referred to as agent bosses, which may correspond to any or any combination of the extraction module, the generation module, the calculation module, the system extraction module, the pre-processing module and the user interface module. Reference is made to Examples 4-6.

In embodiments, the physical entities and the query consist of respective images. In some of these embodiments, the extracting of said identification from said query relates to said at least one technical feature the query relates to, for each image, media-to-text generation. Preferably, the media-to-text generation relates to alt text generation for obtaining said at least one technical feature comprising a text string, wherein said vectors comprise at least one entry formatted as text. In related embodiments, the result thereby relates to image-only output. Such image-only output may for example consist of a selection of physical entities present in the query that are similar to physical entities present in the physical entity data. In other examples, the image-only output may consist of a selection of (anonymized) physical entities present in the physical entity data and similar to one or more physical entities present in the query.

In embodiments, the method further comprises the steps of:
- extracting, from said physical entity data, a plurality of physical entities comprising personal information;
- pre-processing said plurality of physical entities for obtaining anonymized physical entity data comprising a plurality of anonymized physical entities;
- adding, as part of said training of said AI model, said plurality of anonymized physical entities to said training data;
- preferably, training said AI model based on said training data.

In embodiments, the pre-processing relates to introducing at least one pseudonym so that the plurality of anonymized physical entities remains searchable with respect to said at least one pseudonym.

In embodiments, said querying of information relates to any one domain or any combination of domains of: insurance, real estate, financial services, hr & payroll, legal, notarial and accounting.

In embodiments, the AI model comprises at least two AI submodels relating to at least two AI agents; wherein the at least two AI agents are at least two of any of: an insurance AI agent, a real estate AI agent, a financial services AI agent, an hr & payroll AI agent, a legal AI agent, a notarial AI agent, an accounting AI agent, an audit AI agent. In such embodiments, the AI model may be configured for multi-agent reinforcement learning involving jointly optimizing respective reward functions for each of said at least two AI agents. This may relate to embodiments with a multi-agent reinforcement learning algorithm comprising at least two AI agents, each instantiated as a policy network that interacts with a shared environment representing a plurality of physical entities. In such embodiments, each agent receives, as its observation, vectorized representations of physical-entity attributes and features and selects actions that correspond to querying or scoring specific entities. The agents may execute episodes in which they exchange state information and jointly optimize respective reward functions that encode objectives such as maximizing relevance, diversity, or accuracy of the returned entities. During training, each agent's policy is updated via policy gradient or actor-critic methods, using feedback derived from the structured output data-namely, a ranked list of selected physical entities with associated confidence scores-generated after each interaction. To coordinate their behaviour, the agents may employ a centralized critic that evaluates global performance across both agents or use peer-to-peer communication channels to share intermediate embeddings. The resulting system can efficiently generate structured output data that reflects a consensus or complementary assessment of the physical entities, thereby improving overall selection quality and system robustness.

In embodiments, the generating of the structured output data relates to retrieval augmented generation, RAG, with retrieval from at least the AI model followed by generation conditioned by the retrieved information.

In embodiments, the matching based on said similarity relates to a similarity metric involving a knowledge graph comprising a plurality of edges and a plurality of nodes, wherein said matching comprises determining which edges and/or nodes are relevant, and wherein said similarity metric is calculated based at least partly on coefficients associated with respective edges and/or nodes that are deemed relevant.

In embodiments, the retrieval comprises retrieval from a knowledge graph comprising a plurality of edges and a plurality of nodes, wherein the matching based on said similarity relates to a similarity metric involving said knowledge graph through said RAG, wherein said matching comprises determining which edges and/or nodes are relevant, and wherein said similarity metric is calculated based at least partly on coefficients associated with respective edges and/or nodes that are deemed relevant.

In embodiments, the physical entities and the query consist of respective images. In some of these embodiments, the extracting of said identification from said query relates to, for each image:
- media-to-text generation, preferably alt text generation, for obtaining said at least one technical feature comprising a text string, and wherein said vectors comprise at least one entry formatted as text.

In embodiments the result relates to image-only output. In related embodiments, each of the physical entity data and the query and the result are image-only.

In embodiments, said encryption relates to applying at least one of: RSA, Diffie-Hellman, PGP, and ECDSA. RSA stands for Rivest-Shamir-Adleman, Diffie-Hellman refers to the Diffie-Hellman key exchange, PGP to Pretty Good Privacy, and ECDSA for Elliptic Curve Digital Signature Algorithm. RSA may have the advantage of providing strong encryption for secure data transmission, especially in applications wherein key distribution is a concern. Diffie-Hellman may have the advantage of enabling two parties using the invention to establish a shared secret over an insecure channel without transmitting the key itself. PGP may have the advantage of combining encryption and digital signatures, offering both confidentiality and authentication for communication according to the invention. ECDSA may have the advantage of achieving high levels of security with smaller key sizes, which may lead to faster computations and reduced resource usage.

In embodiments the pre-processing relates to encrypting of at least one pseudonym introduced so that the plurality of anonymized physical entities remains searchable with respect to said at least one encrypted pseudonym.

In embodiments the extracting of the identification of the technical feature from the query is based on an LLM, preferably both the receiving and the extracting according to an interaction with a user, and wherein preferably the generating of the structured output data relates to retrieval augmented generation, RAG based on said LLM, with retrieval from at least the AI model followed by generation conditioned by the retrieved information.

In embodiments the result is a personalized result tailored to a user entering the query based on context data. In example embodiments with an LLM, the data may be retrieved through interaction with the user via the LLM comprised in the system. In example embodiments, the context data may be available from another means, e.g. stored data that is part of a user profile associated with the user.

Example embodiments of the invention will be described with reference to Fig. 1.

### Example 1: first example embodiment according to the invention

This example is intended to illustrate the general architecture of the invention, through example embodiments of the method, the device 10, and the system 100 according to the invention, all illustrated by Fig. 1.

The example device 10 includes a network interface configured to receive 3 a query. The query comprising an identification of at least one technical feature.

The device 10 includes an extraction module configured to extract 4 from said query said identification of said technical feature.

The device 10 further includes a memory module storing a trained AI model 5 trained on physical entity data 7 relating to a plurality of physical entities each associated with one or more features including said technical feature.

The device 10 also includes a generation module configured to generate 6 from the trained AI model structured output data 8 comprising a selection of one or more respective physical entities and respective scores indicative of an association between said technical feature and each selected physical entity.

The device 10 includes an output interface for connecting to a calculation module configured to calculate 9, based on the structured output data 8, a result 1, 2 comprising at least said selection of physical entities along with their respective scores.

In some use cases the result may be a general result 1, which may be generated irrespective of any information regarding the user. In other use cases the result is a personalized result 2 tailored to a user entering the query based on context data. In this example the system includes an LLM (see below), and the context data is retrieved through interaction with the user via the LLM comprised in the system. In variants of the example, further context data is available from stored data that is part of a user profile associated with the user.

The AI model 5 is trained by anonymizing and vectorizing physical entity data 7 into a plurality of vectors. The generation of the structured output data 8 from the trained AI model 5 comes from matching of the identification of the technical feature comprised in the query with the plurality of respective vectors based on similarity between said identification and one or more entries in the respective vectors.

The system 100 includes the device 10. The system 100 includes a calculation module that connects to the output interface of the device and calculates 9 the result 1,2 based on structured output data 8. The result comprises at least a selection of physical entities along with their respective scores.

The system 100 includes an extraction module for extracting 13 from physical entity data 7 provided via the system input interface a plurality of physical entities comprising personal information. The system 100 includes a pre-processing module for pre-processing 14 the plurality of physical entities to obtain anonymized physical entity data 15 comprising a plurality of anonymized physical entities. The system 100 includes a training data interface for adding, as part of training of the AI model 5, the plurality of anonymized physical entities to the training data. The system 100 includes a user interface module that outputs 12 via a GUI the result 1,2. In variants of this example, the result is output 12 via an API to external channels (applications). Such output may be combined with display via a user interface.

The generating 6 of the structured output data 8 involves retrieval augmented generation, RAG, with retrieval from the AI model 5 and its vector database and knowledge graph, followed by generation conditioned by the retrieved information. The knowledge graph aids the matching: matching based on said similarity is based on a similarity metric involving the knowledge graph. The knowledge graph has a plurality of edges and a plurality of nodes. The matching is done by determining which edges and nodes are relevant to the identification found in the query. The similarity metric is calculated based at least partly, either directly or indirectly, on coefficients associated with respective edges nodes that are deemed relevant.

The extracting 4 of the identification of the technical feature from the query is based on an LLM. Both the receiving 3 and the extracting 4 are mediated by the LLM. The LLM enables interaction with the user. It also enables retrieving context data. The generating 6 of the structured output data 8 and its RAG is based on said LLM, with retrieval from at AI model 5 and the knowledge graph followed by generation conditioned by the retrieved information.

For generating a personalized result 2, a personalization module is provided that retrieves 11 context information and further processes the data to obtain the personalized result 2.

### Example 2: second example embodiment according to the invention

This example is essentially the same as Example 1, except that it focuses on a specific application in the insurance domain. Specifically, the example focuses on car insurance taking into account details of a person (driver).

The example centers on two essential components of the Retrieval Augmented Generation RAG application, represented by device 10 and system 100. The first component, represented by reference numerals 7 and 13-15, handles data pre-processing and stores all anonymized data in a knowledge graph database. The second component, represented by reference numerals 1-6, 8-9, 11-12, executes the query-answering workflow by retrieving relevant data from the database, extracting necessary features, and supplying them to a machine learning classification model or recommender system. The machine learning classification model or recommender system is thereby comprised in the calculating 9, based on the structured output data 8, of the result 1, 2.

Privacy is ensured throughout the system by exclusively processing anonymized data. The implemented components and their key aspects include pre-processing of data that formats raw inputs into nodes and relations with a suitable extraction technique implemented and evaluated using quality metrics. Data storage in the knowledge graph is achieved through a two-step process involving selection of a suitable graph database service and definition of the graph schema.

Retrieval of relevant data is performed employing a tuned large language model LLM benchmarked for retrieval quality with prompt engineering applied to achieve optimal performance.

The complete pipeline extracts, from the physical entity data, nodes and edges that constitute the knowledge graph in four sequential steps each powered by an LLM: first a persona and its primary language are extracted to guide subsequent prompts; next entity types such as person, car, and insurance are identified to constrain the scope of the following extraction; then actual nodes and edges are derived directly from documents by the LLM; an intermediate structuring stage loads the graph into the database; concurrently documents are vectorized and stored in a vector database. During query processing relevant information is retrieved from both the vector database and the knowledge graph and the retrieved context is provided to an LLM which generates results 1,2 in reply to user queries 3. In the implemented use case queries request features that feed into a machine learning pipeline to compute scores or labels.

As for the physical entity data 7, this may be provided in any format, including documents in pdf, excel, word or txt; or media data such as images or video. For this example, this may relate to a large number of documents relating to car insurance, such as insurance cards (e.g., in the form of an image comprising pixels) showing car and car type and driver and current insurer.

As for the query 3, and/or the context data given by the user, preferably a document such as the current insurance card showing car and car type and driver and current insurer is provided to the system.

For this example, confidential compute is required. For data input by the user, encrypted transfer from client to application allows secure computations on decrypted data. This may relate to a Trusted Execution Environment (TEE) acting as secure enclave in CPU, ensuring that everything inside is "invisible" to the OS. The output visible to the user is limited to stored data in databases (which is anonymized with pseudonyms and encryption), as well as the query results (which are intended to be visible to the user).

As for the extracting 13 and pre-processing 14 of physical entities from the physical entity data 7, automated conversion and extraction is provided. This may relate to txt format conversion, and extraction of personal information. For example, a PDF may be converted into a text document and the personal information "Policy holder: Nati BV" may be extracted and anonymized with a randomly generated pseudonym, "Policy holder: dezfiegfuozefb" (with "dezfiegfuozefb" as exemplary randomly generated text string).

The pre-processing 14 also comprises searchable encryption. This relates to encryption of personal information before it is stored in the database. The searchable nature means that the pseudonym is retrievable after encryption. Continuing with the same example as above, "Nati BV" is replaced by "dezfiegfuozefb" and "dezfiegfuozefb" is then converted into its encrypted version "Encrypted(dezfiegfuozefb)", where encryption may relate to one of: RSA, Diffie-Hellman, PGP, and ECDSA. The encrypting is done in such a way that the encrypted labels remain searchable with respect to the encrypted pseudonym.

Turning to Fig. 1, it may be noted that extraction 13 and pre-processing 14, depicted as two blocks, may entail more than two blocks or substeps. Particularly, coining notation (i-ix) not shown in the figure, in this example, extraction 13 and pre-processing 14 entails (i) persona extraction, followed by (ii) language extraction, followed by (iii) entity type extraction, followed by (iv) entity extraction. This may then feed into the "block" (v) of anonymized physical entity data 15 comprising a plurality of anonymized physical entities. These anonymized physical entities are then fed to block (or device) 10. This feeding relates, on the one hand, to (vi) vectorization which is then (vii) stored into a vector database belonging to the AI model 5, and, on the other hand, to (viii) processing for detection of nodes and edges and weights (or coefficients) for (ix) storing into a knowledge graph also belonging to the AI model 5. Thereby, the extracting 4 involves an LLM according to a RAG set-up with retrieval from both the vector database (vii) and the knowledge graph (ix) to calculate the structured output 8. This RAG set-up, with (vii) and (ix), amounts to a hybrid RAG.

To deal with confidential compute, in this example, the RAG is considered to only process anonymized data.

The RAG input may relate to a text document as well as an anonymized segment of original PDF files. In a specific example, the following may be visible to the RAG: *Example Quarterly coverages and risks Annual premiums in EUR including taxes Passenger car max* 3.5 *T : HONDA ACCORD License plate : 002AJC B.A. Auto - BM - 2 lifelong BA Max XL incl. 330.00 Top Vehicle Multi-risk - Agreed value 2 250.00 no deductible Material damage Car - Agreed value 2 350.00 Deductible : 225.00 EUR Extended legal assistance 60.00 Total 1 261.98 Split premium 538.86 Modalities of the coverages Passenger car max* 3.5 *T.*

The RAG persona, language and types, on the other hand, may relate to following example:
*Persona: you are an expert data analyst skilled at data extraction entity recognition and relationship mapping adept at helping people identify and structure nodes and relationships from complex document contents ensuring clarity and coherence in the representation of information.*
*Language: English.*
*Entity types: license plate, car, insurance type.*

Particularly, in relation to both a query and to the physical entity data, the entity types may relate to technical features "license plate" and "car" and "insurance type", and the respective identifications may be "002AJC", "Honda Accord" and "BA Max XL". The persona, on the other hand, may be an "implicit" feature with identification "expert data analyst".

The RAG entities that may be derived in this example are the following, where the graph structure is composed of Nodes and Edges. For Nodes, with
Nodes (ID, category, description)
the following examples (where BA denotes civil liability) occur:
- (002AJC, license plate, license plate of a Honda Accord)
- (Honda Accord, car, car belonging to the car with license plate 002AJC)
- (B.A. Auto, insurance type, type of insurance for cars)
- (BA Max XL, insurance type, type of insurance for cars, can be given for life)
- (Top vehicle Multirisk, insurance type, type of insurance for cars)
- (material damage car, insurance type, type of insurance for cars)
- (extended legal aid, insurance type, type of insurance for cars)
- (Total premium, insurance premium, the total premium denotes the price of all premiums for a specific vehicle)

For Edges, with
Edges (Label, source, target, description, strength)
the following examples occur:
- (Has insurance, 002AJC, B.A. Auto, the car with license plate 002AJC has the B.A. Auto insurance with a premium of 330.00 EUR, 9)
- (Has insurance, 002AJC, BA Max XL, the car with license plate 002AJC has the BA Max XL insurance with BM-2 for life and a premium of 330.00 EUR, 8)
- (Has insurance, 002AJC, Top Vehicle Multi-risk, the car with license plate 002AJC has the Top Vehicle Multi-risk insurance with a premium of 250.00 EUR without deductible, 9)
- (Has insurance, 002AJC, Material Damage Car, the car with license plate 002AJC has the Material Damage Car insurance with a premium of 350.00 EUR and a deductible of 225.00 EUR, 9)
- (Has insurance, 002AJC, Extended Legal Assistance, the car with license plate 002AJC has the Extended Legal Assistance insurance with a premium of 60.00 EUR, 9)
- (Has premium, 002AJC, Total premium, the car with license plate 002AJC has a total premium of 1 261.98 EUR, 8)

As for the format of the extracted nodes and edges, it is ensured that these are compatible with the knowledge graph database.

As indicated above, also vectorization is involved. The conversion takes place from text to vectors. The vector representations are used for similarity search.

The above may be illustrated with a concrete example of a query 3.
The query is: "What is the premium for Liability Insurance for the vehicle with license plate 002AJC?"
The entry (e.g., context) in the vector database is: Quarterly coverages and risks Annual premiums in EUR, including taxes Passenger car max 3.5 T : HONDA ACCORD License plate : 002AJC B.A. Auto - BM - 2 lifelong BA Max XL incl. 330.00 Top Vehicle Multi-risk - Agreed value 2 250.00 no deductible Material damage Car - Agreed value 2 350.00 Deductible : 225.00 EUR Extended legal assistance 60.00 Total 1 261.98 Split premium 538.86 Modalities of the coverages Passenger car max 3.5 T.
The entry (e.g., context) in the graph database automatically identifies the relevant nodes and edges.
The result (answer, general or personalized) is: "The premium for Liability Insurance for the vehicle with license plate 002AJC is 330.00."

Example features for car insurances are the following:
for years N-5 ... N and N+1
premiums, car prices, warranties, fuel types, car security systems, insurance protections, etc.
features extracted from documents

This may relate to, e.g., 200+ features for basic car insurances. Thereby, each feature gets a specific value. This valued is then translated into a rating value. For instance:
Value → rating value: premium price: 330.00 € → real inflation value 7
Premium year N-1: 300.00 € + real inflation 2.8 %
Rating value → label real inflation value 7 → label CC.

Overall, for each feature a label is derived. Also, the number of occurrences for each label is derived. The number is multiplied with a weight (e.g., ranging from -100 to 100). The average of all weights may constitute the score, that may take into account the complete overview of all features from year N-5 to N.

As for presentation of the result, diagrams may be shown through a GUI. This may include an overview with a selection of the most important features, e.g., the features with highest weights. It may also include a history of scores for years N-4 to N. It may show tables and text such as the following:
Score in year N: 12.04225352112676 Label in year N: B
Number of used features: 142
Feature Accuracy: 76.34%
Overview of positions according to scores position rating score
0 AAA 1800
1 A 1320
2 C+ -1200
3 D+ -1080
4 A+ 630
5 C -600
6 AA 540
7 A++ 400
8 BBB 350
9 D -200
10 DDD -180
11 D++ -160
12 BB 80
13 CCC -60
14 B+ 40
15 B++ 30
16 B 20
17 CC -20
Year; Score; Label; Number of used features; Feature Accuracy
0 N-5 4.705882 B 17 54.84%
1 N-4 22.800000 B 25 80.65%
2 N-3 21.200000 B 25 80.65%
3 N-2 20.400000 B 25 80.65%
4 N-1 9.200000 C 25 80.65%
5 N -8.400000 C 25 80.65%

In variants of the example, additional personal features (context data) may be included, e.g. relating to age, place of residence, etc. Also, a (more) personalized score may be provided. Also, advice may be included in the result (possibly based on context data) relating to how to improve the low rated features. Examples include: "Multirisk on car with age 5+: label DDD"; "Advice: cancel Multirisk insurance label A+".

### Example 3: third example embodiment according to the invention

This example is essentially the same as Example 2, except that the physical entities and the query and the result all consist of respective images. In other words, this example embodiment is image-only both for its input and its output. The physical entity data is hence a collection of images. This may relate, e.g., to a folder with image files. In some variants of this example, only the pixel data of images is used. In other variants, data is further "enriched" with data that relates to the images. A relation between an image and a portion of text may be detected for extracting an image-text combination, such as a caption, whereby the caption may be a relevant stand-alone sentence, or may preferably be combined with a text string generated through alt text generation, to obtain an enriched sentence. Likewise, metadata of the images such as EXIF information or file date or file name may be used to enrich the relevant sentence associated with the image. The result consists of one or more images.

### Example 4: fourth example embodiment according to the invention

This example illustrates an advanced architecture with 4 components and a middleware layer.

The system is provided with an advanced Financial Intelligence Layer, composed of four core functionalities: a Score Engine, a Report Generator, a Conversational AI Module, and a Metrics Dashboard. In such embodiments, the system is supported by an Al-middleware layer called AIDA (AI Data Agency) or, equivalently, an AIDA module, which may correspond to any or any combination of the extraction module, the generation module, the calculation module, the system extraction module, the pre-processing module and the user interface module.

AIDA provides a multi-agent system composed of seven domain-specific autonomous agents, each with embedded domain knowledge and access to structured and unstructured financial data. These agents may act as virtual experts in following domains: Real Estate AI Agent (real estate broker), Financial Services AI Agent (banker), Insurance AI Agent (insurance broker), HR & Payroll AI Agent (HR manager), Legal AI Agent (lawyer), Notarial AI Agent (notary), Accounting AI Agent (accountant). These agents operate according to multi-agent reinforcement learning principles and continuously optimize their decision algorithms based on feedback loops from the user environment.

The details are as set out in the below paragraphs 1.1 to 4.5.

### 1. Functional Components of the example system

### 1.1. Score Engine

This module performs semantic and quantitative analysis on product parameters via the aforementioned agents and **assigns** a **label score on** a **scale from A to D:**
**A (≥ 90%):** maximum alignment with business needs
**B (≈ 75%):** High degree of usability.
**C (≈ 50%):** limited applicability
**D** (< **25%):** Not suitable within current context

This label generation is based on **NLP-based intent matching** (Natural Language Processing), contract analysis and fit modeling via supervised learning techniques.

### 1.2. Report Generator

The reporting module compiles dynamic reports based on the findings of both **Trackers** (score agents) and **Tracers** (compliance agents). These include:
Visualization of conforming versus deviating parameters
Annotations based on legal risks, insurance terms, tax implications
Natural Language Summarization (NLS) in understandable output for stakeholders

### 1.3. Conversational AI Module (Chatbot Interface)

Through an **LLM-powered conversational interface** (e.g., GPT-4 or higher), companies can:
Deliver prompts based on report analysis
Simulate hypothetical scenarios ("What-if" analysis)
Generate actions based on output using **prompt engineering** and **semantic query parsing**

### 1.4. Metrics - Dashboard

Real-time visualization of business data with **custom KPI settings:**
Predictive analytics based on historical data
Scenario modeling with extrapolation of strategic decisions
Dynamic dashboards via **streaming analytics frameworks** such as Apache Kafka or Azure Stream Analytics
Output optimized for strategic decision-making through integration with **Business Intelligence Tools** (such as Power BI, Tableau)

### 2. AI Trackers: domain-specific evaluation agents for real-time financial alignment

In the context of continuous digital monitoring and decision-making within enterprises, it is imperative that financial products and services are permanently calibrated for their relevance, efficiency and conformity to the needs of the business. Within the **example architecture, AI Trackers** play a central role. These agents are designed to evaluate financial products in real time for their degree of strategic, operational and legal suitability for the company in question.

Analysis of the functional scope, algorithmic methodologies and integration capabilities of the four core trackers:
- **Real Estate - AI Agent**
- **Financial Services - AI Agent**
- **Insurance - AI Agent**
- **HR & Payroll - AI Agent**

AI Trackers act as **intelligent matching engines,** focusing on:
- Semantic and numerical comparison of product parameters with internal business objectives
- Label generation via **fit-scoring models** supported by **Bayesian classification, multi-criteria decision analysis (MCDA)** and **reinforcement learning**
- Continuous data intake from external sources (market data, price signals, legislative updates) and internal company data (dashboards, KPIs, policy documents)

Each tracker operates on **modular knowledge bases,** linked to specific APIs, databases and legal normative frameworks.

### Functional Description by AI Tracker

### 2.1. Real Estate AI Agent (Real Estate Broker)

- **Purpose:** Evaluation of real estate transactions, lease and purchase agreements, site analyses, operating costs versus benefits
- **Technology:**
   - Geo-AI for location insight, linked to GIS data and property portals
   - Predictive modeling for future property value and returns
   - Real estate contract parsing via NLP and OCR (rent index, terms, cost structure)
- **Tasks:**
   - Scoring real estate proposals based on ROI, location, legal certainty
   - Scenario analysis at purchase or rental (e.g. effect on solvency and capital structure)
   - Comparative analysis with real estate market benchmarks

### 2.2. Financial Services AI Agent (Banker)

**Purpose:** Analysis of banking products such as credit, leasing, investment instruments, cash management solutions

### Technology:

Financial product ontology mapping
Real-time interest rate tracking and spread analysis
Sentiment analysis at banking terms and credit agreements

### Tasks (Duties):

Fit score of bank products vs. cash flow projections and capital needs
Compliance review of credit terms and clauses
Simulation of debt ratios at different financing options

### 2.3. Insurance AI Agent (Insurance Broker)

**Objective (Purpose):**Evaluation of policy terms, coverage types, premium structures and risk profiles

### Technology:

Policy clause extraction via Legal NLP
Risk exposure mapping with probabilistic modeling (e.g., Monte Carlo simulations)
Contract mining for exclusions, franchise amounts and cumulative risks

### Duties:

Calculation of fit score based on business risk profile
Audit of existing insurance portfolio
Detection of overlaps and gaps in coverage

### 2.4. HR & Payroll AI Agent (HR manager).

**Purpose:** Review of payroll systems, benefits packages, staff insurance, mobility budgets and tax optimizations

### Technology:

Compensation analysis engines linked to market data
AI-supported benefits configurators
Legislative modules for NSSO, tax deductibility and collective bargaining provisions

### Duties:

Fit score of employee benefits versus industry benchmarks and retention goals
Analysis of wage cost impact on business structure
Simulations of alternative compensation schemes

### 2.5. Interaction with other system components

**AI** Trackers do not operate in isolation but **cooperate with Tracers and other AIDA agents.** They generate:
- **Score labels (A-D)** by domain, via a multicriteria matrix
- Input to the report generator
- Suggestions for follow-up analysis through the conversational interface (chatbot)
- Data structures visualized in the metrics dashboard

They automatically trigger compliance checks when a low score or elevated risk profile is identified, and can trigger other agents (e.g., the lawyer or accountant) for further due diligence.

### 2.6. Summary Functional Overview of the AI Trackers

| **[00168] AI Tracker** | **[00169] Do main** | **[00170] Core functionality** | **[00171] Techn ologies/Tech niques** |
|---|---|---|---|
| **[00172] Real Estate AI Agent** | **[00173]** Pro perty Manageme nt | **[00174]** Property value evaluation, contract analysis, site insight | **[00175]** Geo-AI, NLP, ROI modeling, OCR |
| **[00176] Finan cial Services AI Agent** | **[00177]** Ba nking | **[00178]** Credit analysis, liquidity planning, interest rate tracking | **[00179]** Ontolo gy mapping, interest rate engines, sentiment analysis |
| **[00180] Insura nce AI Agent** | **[00181]** Ins urance | **[00182]** Policy comparison, risk calculation, contract clauses | **[00183]** Legal NLP, risk simulation, exclusion mining |
| **[00184] HR & Payroll AI Agent** | **[00185]** Per sonnel manageme nt and remunerati on | **[00186]** Wage cost analysis, benefits optimization, social contributions | **[00187]** Comp ensation engines, tax logic, HR compliance frameworks |

The AI Trackers act as **real-time evaluation interfaces** for domain-specific financial products and services. Thanks to their modular and scalable architecture, they provide a digital buffer between operational choices and strategic decision-making. They enable organizations to quickly anticipate opportunities or risks with minimal human intervention and generate informed input for cross-functional AI agents within the broader system.

### 3. AI Tracers: Compliance, Governance & Accounting/Notarial Intelligence Engine

**A** possible crucial part of the AIDA framework, **AI Tracers** are responsible for continuous monitoring, interpretation and validation of complex legal, tax and accounting processes. These agents function as **intelligent governance engines** with specialized modules for legal documents, accounting and notarial governance.

Their operational capability is based on the integration of **Natural Language Processing (NLP), regulatory rule engines, anomaly detection,** and **automated reasoning frameworks.** This provides deep, autonomous analysis of both structured data (tables, registers) and unstructured data (contracts, deeds, tax documents).

### 3.1. Legal & Compliance Domain

**Legal NLP** for interpretation of:
- Contractual clauses
- Prospectuses
- General and special conditions

Extraction of obligations and entities via **Named Entity Recognition (NER)** and **dependency parsing**

Rule-compliant validation using:
- **Compliance ontologies**
- **Knowledge graphs** with linked regulations (e.g. PSD2, AML/KYC, ESG rules)

### Risk detection based on unsupervised anomaly detection models

### 3.2. Accounting & Tax Domain

### Automated Depreciation Auditing:

Analysis and control of depreciation tables in accordance with accounting standards (IFRS, GAAP)

### VAT Declaration Validation:

Real-time monitoring of rate structures and VAT categories

### Fiscal Scenario Simulation:

AI-driven calculation of fiscal impact on strategic decisions

### Ledger Reconciliation Engine:

Detection of discrepancies between subledger and general ledger

### Payroll & Social Contributions Monitoring:

Validation of labor costs, NSSO contributions and periodic payroll returns

### 3.3. Notarial Governance Domain

The **Notarial AI Tracer** acts as the notary's digital counterpart, with an explicit focus on legal certainty, compliance and document authenticity. This agent is responsible for a wide range of governance activities, including:

### Registry and database validation:

Integration with official registries (e.g., land register, business register, UBO register)

Verification of property titles, statutes and historical transaction data via **trusted data oracles**

Authentication via **blockchain-based ledger integration**
for evidence

### Deed structuring and article generation:

Automatic construction of legal deeds using

### template-based document generation

Context-specific article processing based on legal logic and relevant regulations

Semantic analysis of clauses with warnings for conflicting clauses

### Regulatory compliance and customization:

Up-to-date integration with national codes and notarial standards

Automatic adjustment of deeds to recent law changes via **regulation-aware content engines**

Contextual custom at function of client-specific parameters (private individual, corporation, estate planning, etc.)

### Audit trail & version control:

Version control and timestamping of deeds for legal traceability

Secure document management via **end-to-end encrypted archiving**

Integration with **eIDAS-compliant e-signature modules** for legally valid signing

### 6.4. Summary Functional Overview of AI Tracers

| **[00229] Domain** | **[00230] Functionality** | **[00231] Technolog ies/Techniques** |
|---|---|---|
| **[00232]** Legal | **[00233]** Interpretation of contracts, conditions, prospectuses | **[00234]** Legal NLP, NER, compliance ontologies |
| **[00235]** Tax | **[00236]** VAT return, tax optimization, depreciation | **[00237]** Tax logic engines, anomaly detection, fiscal simulations |
| **[00238]** Accounting | **[00239]** Reconciliation, payroll audit, audit preparation | **[00240]** AI-driven reconciliation, dynamic ledger validation |
| **[00241]** Notary Office | **[00242]** Registration control, deed generation, law compliance, customization | **[00243]** Semantic clause modeling, regulation-aware document engines |

These governance AI agents may be the foundation for reliable, scalable and legally robust decision support. They enable organizations to significantly reduce **legal risk, fiscal exposure** and **compliance complexity,** while increasing process automation and speed.

### 4. Integration with External Expert Systems: Agent Bosses

### 4.1. Conceptual Architecture: The Agent Boss Layer

In a modern digital enterprise, **ecosystem thinking** is fundamental. The example system's AI agent architecture therefore deliberately extends beyond the boundaries of the enterprise through the so-called **Agent Boss layer.** This layer represents **external, domain-specific experts (people or systems),** typically localized in partner organizations, service offices or compliance institutions.

Agent Bosses form the **extended interface** between internal AI agents (Trackers and Tracers) and external decision-makers, functioning on the basis of **interoperable data exchange, AI-powered interpretation** and **human validation processes.**

### 4.2. Functional tasks and interaction protocols

Collaboration between AI agents and Agent Bosses is more than mere data transfer; it is **interactive, semantic-driven collaboration.** This collaboration is supported technically through a set of API-based and LLM-supported modules.

### Core functionalities of the Agent Boss layer:

### - Human-in-the-loop validation (HITL):

External experts (lawyers, notaries, accountants, brokers...) validate Al-generated reports, predictions or recommendations.

Validation is done via audit trails, embedded explanations (XAI), and documentation-generated logic.

### - Bidirectional communication via chatbot models:

External experts can formulate questions, counter-examples or additions through a secure conversational interface.

Built-in **semantic query parsers** translate these interactions into "machine-readable" instructions for reprocessing within the AI system.

### - Contextual Precision Enhancement:

Agent Bosses add contextual knowledge not present in internal data structures, such as local laws, exception rules or industry-specific practices.

This contextual enrichment increases the accuracy and usability of decision suggestions generated by the AI system.

### - Knowledge feedback through structured input/output (SIO):

Structured output from the Agent Boss systems (such as XML/JSON files, audit reports, statutes) is reinjected into the AIDA core.

This input triggers new learning loops and recalibration of recommendation models.

### 4.3. Technology integration and interoperability

For maximum synergy, external expert systems may be required to **be AIDA-compatible.** This means that they meet a number of technical and semantic interoperability requirements:

**Open API architecture** (RESTful/GraphQL) for connection to external accounting, insurance, real estate or legal platforms.

### Standardization of data models based on:

FIBO (Financial Industry Business Ontology).

XBRL (for financial and audit data)

LegalRuleML (for legal document structuring)

**Use of containerized agent deployment** (e.g., via Docker, Kubernetes) to facilitate cross-institutional exchange without privacy compromise.

### Federated Learning between companies:

AI models are trained on decentralized data sets within the walls of the respective companies.

Only model updates are shared, ensuring privacy, data security and context sensitivity.

Consistency in recommendations across the entire chain is thus structurally embedded.

### 4.4. Governance and trust architecture

Success of Agent Boss interaction may be enabled by a **trust architecture,** where transparency, verifiability and security are essential. Supporting techniques:

**Zero Knowledge Proofs (ZKP)** for validation of sensitive data without explicitly sharing it.

**Blockchain audit trails** for tracking actions and changes in documents or datasets.

**Digital ID verification** and **role-based access** (RBAC) For controlled engagement of external partners.

**Ethical AI audits** for verification that recommendations do not contain bias or systematic errors.

### 4.5. Strategic potential: from expert linkage To Ecosystem Intelligence

The integration of Agent Bosses may increase the quality of individual analyses, any may contribute to the creation of **a collective intelligent ecosystem** of companies, consultants and institutions that structurally share and co-create knowledge through AI interfaces. This may lead to:

Increased adoption of **decision intelligence** in the supply chain.

Faster validation and feedback loops, with significant time-to-decision reduction.

**A decentralized AI governance model,** where not one actor dominates, but where decision-making power is distributed and controlled through AI agents.

### 4.6. Summary Functional Overview of the Agent Boss layer.

| **Functionality** | **Description** | **Technologies /Tools** |
|---|---|---|
| **HITL** validation | External expert evaluates AI output | Explainable AI, audit trails, expert UI |
| Semantically driven communication | Chatbot interface for dialogue with remote offices | LLM, semantic query parsing, secure messaging protocols |
| Contextual enrichment | Domain-specific knowledge is added to analysis | Ontology-based enrichment, expert rulesets |
| Federated AI training | Decentralized model improvement without data sharing | Federated learning, model aggregation protocols |
| Integration through open standards | Connection to external systems | REST APIs, FIBO, XBRL, LegalRuleML |
| Trust mechanisms | Protection of data integrity and authenticity | ZKP, blockchain logging, elD, RBAC |

The Agent Boss layer may be an essential extension of the system, providing the bridge between **human expertise and autonomous AI systems.** Adopting this hybrid form of collaboration creates a robust, scalable and ethical framework in which companies - supported by both internal and external agents - can operate accurately, quickly and context-aware.

### Example 5: fifth example embodiment with audit AI agent according to the invention

This example is essentially the same as Example 4, with a plurality of AI agents being provided via an advanced architecture with 4 components and a middleware layer. The only difference relates to the addition of an audit AI agent. In this example, the audit AI agent is provided in addition to the other AI agents described in Example 4. In a variant of this example, one or more of the AI agents described in Example 4 are replaced by the audit AI agent.

Like in Example 4, the system again relates to an advanced Financial Intelligence Layer, composed of four core functionalities: a Score Engine, a Report Generator, a Conversational AI Module, and a Metrics Dashboard. Thereby, the system is supported by an Al-middleware layer called AIDA (AI Data Agency) or, equivalently, an AIDA module.

The audit AI agent provides a *meta-control mechanism* within the AIDA system.

### Audit Domain - Audit AI Agent (Control & Verification)

**The Audit AI Agent** acts as a specialised *Tracer* within the AIDA ecosystem and focuses on in-depth **validation, recalculation and data traceability** of outputs generated by other AI agents. Unlike other Tracers, which mainly focus on legal or accounting standards frameworks, the Audit Agent focuses on **methodological and computational reliability** of decisions and scores.

### Core functionalities

### Score validation and recalculation

Verification of A-D labels generated by the Score Engine by alternative calculation methods (cross-verification).

Simulation of score output via other formulas, weights or parameter sets.

Use of re-prompting and re-querying techniques to re-query LLM responses under modified output conditions.

### Data lineage & provenance logging

Full logging of data streams, input-output relationships and source verification (GDPR).

Annotation of datasets with metadata on origin, time of delivery, transformation history and responsible agent.

Use of provenance frameworks and standardisation (e.g. W3C PROV-DM).

### Log and audit trail development

Creation of digital logs with timestamped entries on decisions, anomalies, score changes and recalculations.

Integration with existing audit trail systems and blockchain logging if required.

Export capability in audit formats (e.g. XBRL, JSON-Audit).

### Monitoring of LLM decisions

Evaluation of LLM generations for consistency, semantic correctness and bias sensitivity.

Re-execution of prompts with variations in context, tone-of- voice and numeric instructions (prompt-mirroring).

Application of Explainable AI (XAI) principles to increase auditability of model output.

### Integration with existing Tracers and Agent Boss layer

Activation of the Audit Agent in case of conflicting output between Tracers.

Ability to escalate to (external) Agent Bosses for human validation.

Triggering of learning loops in case of anomalous results for model optimisation (retraining suggestion).

### Application examples

| **Case study** | **Audit Intervention** | **Result** |
|---|---|---|
| Score difference between HR and Finance Agent | Re-calculation via alternative MCDA methods | Score adjustment and explanatory log |
| Insurance analysis with unclear clause | LLM re-prompting with legal recontextualisation | Adjusted contract interpretation |
| Non-reducible data source in KPI dashboard | Lineage tracking and metadata enrichment | Marking as "unconfirmed source" |
| Risk analysis without consistent scoring path | Triggering of Audit Agent with logging output | Report with audit trail added |

### Technological Building Blocks

Prompt audit module (reuse of conversational input with variations)
Data provenance ontologies (e.g. PROV-O, DCAT)
Regulation-aware audit engines
Automated re-query manager (with scenario-switching and formulaic variations)
Semantic diff engine (comparison between original and recalculated output)

### Added value

The Audit AI Agent acts as the epistemological memory and ethical compass within the provided ecosystem. By systematically recording, reassessing and explaining, the agent not only increases the trust value of the AI system, but also delivers concrete compliance and quality benefits for internal and external audit processes.

### A. Technical Specifications of the Audit AI Agent

### A.1 Architectural embedding

The Audit AI Agent is deployed as a specialised Tracer within the AIDA multi-agent architecture. The agent operates cross-domain and acts as a meta-controller for validation, verification and logging of decisions made by other agents (both Trackers and Tracers).

| **Component** | **Embedding within system layer** |
|---|---|
| Agent type | Tracer (Control & verification agent) |
| Positioning | Cross-domain validator within AIDA |
| Activation points | Automatic (in case of anomaly) or on-demand via interface |
| Interaction | Via RESTful API, prompt replay engine and LLM controller modules |

### A.2. Functional Modules

| **Module** | **Description** |
|---|---|
| ScoreValidator | Recalculation and verification of fit scores using alternative scoring models (see *FF Score - extended version)* |
| RePrompt Engine | Automatic reconstruction of prompts with custom parameters or context |
| LineageTracker | Builds a structured data lineage according to W3C PROV-DM standard |
| AuditLogger | Timestamped logging of audit activities, trigger events and anomalies |
| BiasVerifier | Detection of inconsistencies or potential LLM bias via semantic comparison |
| XAI Explainer | Generates explainable reporting of decision path and deviation analysis |

### A.3. Input and output formats

| **Interface/Module** | **Input** | **Output** | **Format** |
|---|---|---|---|
| RePrompt Engine | Prompt string+ variation params | Alternat ive LLM respon se | JSON, Markdown |
| ScoreValidator | Original score matrix | Recalculated matrix - differential report | CSV, XML, XBRL |
| LineageTracker | Data point ID + metadata | Lineag e trail+ source referen ce | JSON-LD, RDF |
| AuditLogger | Event object | Encrypted log entry | JSON-Audit, SysLog format |
| BiasVerifier | LLM output + verification questions | Bias score + neutrali sation sugges tions | YAML, Markdown |

### A.4. Technologies and Frameworks

| **Technological component** | **Specification/Role** |
|---|---|
| **LLM prompt replay engine** | Reconstruction of prompts for validation |
| **PROV-O / PROV-DM** | Data provenance modelling |
| **Semantic diff toolkit** | Comparison of output at semantic level (e.g. via BERT embeddings) |
| **Explainable AI libraries** | Use of SHAP, LIME or custom attribution models |
| **Audit trail engine** | Logging module with integration into blockchain or SIEM system |
| **Rule-based Trigger Engine** | Activation in case of score discrepancies, incomplete sources or anomalies |

### A.5. Compliance & Security

| **Domain** | **Measures / Integration** |
|---|---|
| **Data consistency** | Formula parity validation+ timestamp check |
| **Auditability** | Logging with blockchain link or encrypted archive (AES256) |
| **Transparency (XAI)** | Explainability module for each recalculation or deviation |
| **Access control** | RBAC (Role-Based Access Control)+ Logging of user triggers |
| **Data provenance** | Full provenance annotation via PROV standards |

### A.6 Example scenario (technical)

**Situation:** The HR & Payroll AI Agent gives a score B to a flexible payroll package.

### Action:

- Audit AI Agent receives trigger due to low explainability score of the LLM output.
- The RePrompt Engine reformulates the scenario with different weightings for mobility budgets.
- The ScoreValidator recalculates the fit finance score with adjusted CLA rule set.
- The AuditLogger logs the difference: original score= B (75%), recalculated = C (52%).
- The report is enriched with an XAI output and lineage information for both datasets.

### A.7 Summary Table

| **Audit AI Agent Component** | **Description** |
|---|---|
| Type | Cross-agent Tracer |
| Focus | Audit, validation, provenance, transparency |
| Technologies | LLM, NLP, PROV-O, XAI, Prompt Variation |
| Outputs | Recalculated scores, lineage trails, log files |
| Links | AII Trackers, Tracers, Conversational Interface, Agent Bosses |
| Value creation | Trust, verification, traceability, consistency |

### Compliant audit report - AUDIT AI AGENT

Below, an example of an audit report generated via the audit AI Agent is provided.

*Systematically query all KPIs with a focus on sales optimisation, customer value and regulation.*

### I. Audit parameters & methodology

| **Element** | **Content** |
|---|---|
| **Date range** | N, N-1, N-2, N-3, N-4, N-5, N+1 (projection to next year) |
| **Data sources** | Market data, benchmarking tools, internal customer data, product info |
| **Processing agent** | Audit AI Agent (with ScoreValidator, LineageTracker & BiasVerifier) |
| **Standards framework** | FSMA guidelines, ESG standards, ISO 9001 (customer orientation), Solvency II, IDD, MiFid |
| **Scoring method** | Weight score per KPI (0-100), with impact weighting on sales & compliance |

### II. KPI Analysis per Theme Domain

### 1. Market & price trends

| **KPI** | **Survey** | **Determination (year)** | **Impact on Sales** | **Score (0-100)** | **Comments** |
|---|---|---|---|---|---|
| Market benchmark premiums | N | 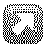 3% increase | High | 85 | Market share shifts to flexible policies |
| Relevance price levels | N-1 | 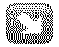 relative to competitor | Very high | 92 | Affordabl e package s convert better |
| Specific evolutions coverage | N | +2 new variables | Average | 70 | Niche products emerge |
| Premium vs coverage (value for money) | N | Imbalance at 40% | High | 78 | Customer expects higher coverage at premium segment |

### 2. Sustainability & ESG compliance

| **KPI** | **Feature** | **Determination** | **Impact on Sales** | **Score** | **Audit advice** |
|---|---|---|---|---|---|
| Green home insurance | Solar panels, EPC value, CO₂ emissions | 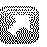 increasing demand | High | 88 | Include ESG label in policy conditions |
| Recovery from natural disasters | Natural disasters, air quality | Insufficient info | Average | 63 | Making conditions more transpare nt |
| Sustainable damage repair | Use of eco-materials | 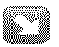 weak policy | Low | 45 | Seeking partnership s with green repair companies |

### 3. Safety, Protection & Technology

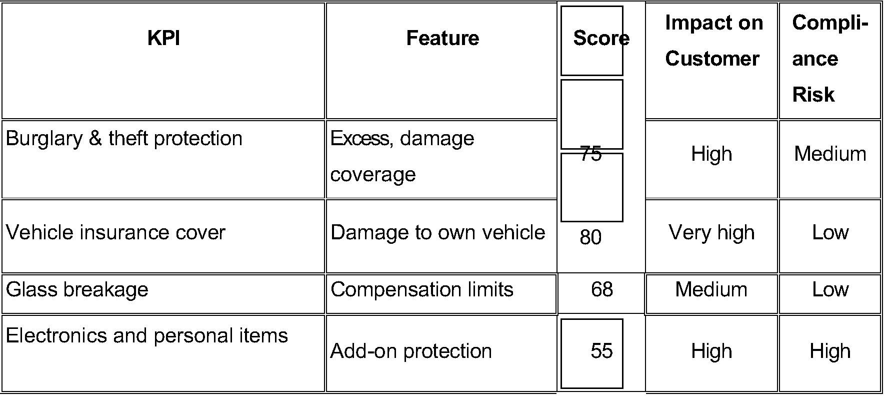

### 4. Customer satisfaction & claims management

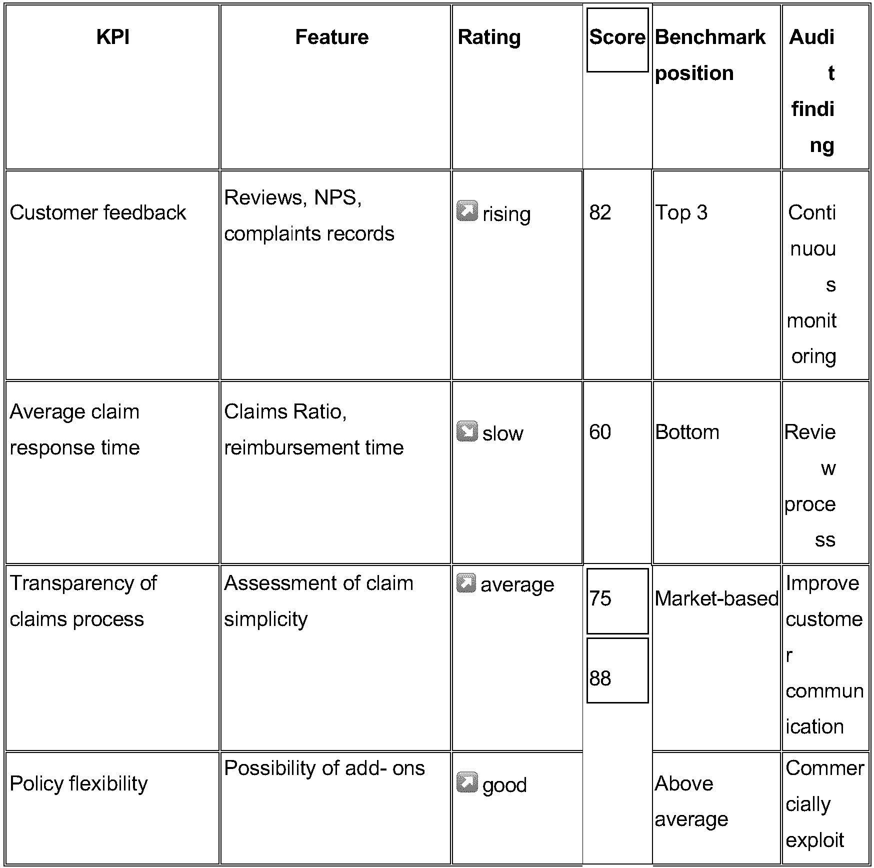

### 5. Financial Health & Compliance

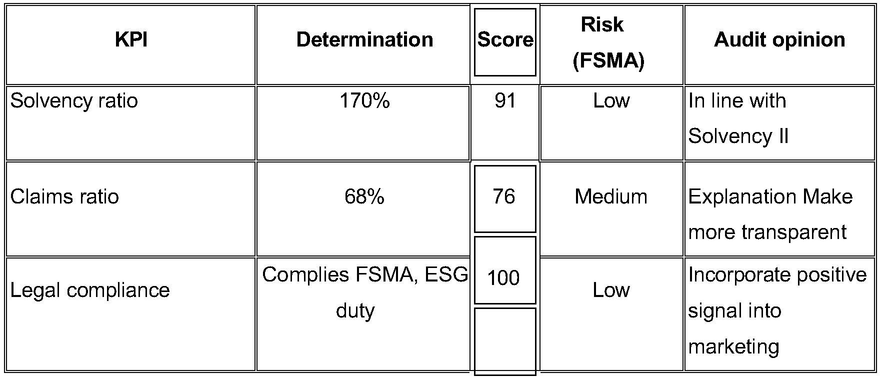

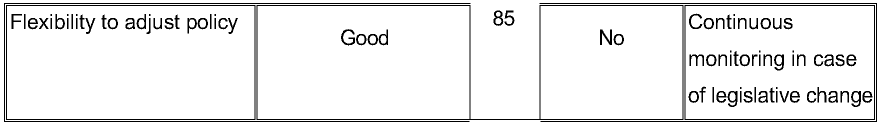

### III. Compliance Check via Audit AI Agent

| **Audit query** | **Result** | **Action require ment** |
|---|---|---|
| Are all relevant KPIs queried in sales advice? | ✔ Yes | - |
| Are premium comparison data points correctly traceable? | ✔ Verified | - |
| Are claim processes sufficiently transparent (for FSMA inspection)? | × Incomplete | Adjust process schedule |
| Is ESG integration into products demonstrable through policy terms and conditions? | × Partial | Expand ESG disclosure |
| Is price-quality analysis based on current market benchmarks? | ✔ Yes | - |
| Can LLM-generated recommendations be explained and retraced? | ✔ via XAI module | |

### IV. Strategic Advice for Sales Optimisation

- **Top KPIs for sales impact** (based on score+ relevance):
   ∘ Customer satisfaction & claims process (88)
   ∘ Value-for-money analysis (78)
   ∘ ESG-related home insurance (88)
   ∘ Flexibility & Add-ons (85)
   ∘ Burglary & personal property protection (75)
- **Focus areas for upsell:**
   ∘ **Electronics** & personal items → expand protection
   ∘ **Green coverage-** ESG score visible in dashboard
   ∘ **Breakdown & glass insurance→** combine as loyalty bonus

### V. Recommendations for a fully compliant report

1. Mandatory querying of all KPIs via a structured query flow.
2. Prompt templates provided per KPI to give Audit AI Agent proper context.
3. Make XAI output mandatory in case of deviating scores compared to benchmark.
4. Activate data lineage logging for all critical score calculations.
5. Integrate real-time monitoring dashboards with alerts on

FSMA-sensitive parameters.

Impact on sales.
- KPIs with **direct impact on conversion, upsell and customer retention.**
- KPIs that **customers compare most often** when choosing insurance.
- KPIs that **differentiate** against competitors.

*Prioritised ranking of KPIs based on their sales impact.*

| | |
|---|---|
| Breakdown: | **top priority** ("high" or "red") (may be represented by red dot - not |
| shown) | |
| | **medium priority** ("medium" or "yellow") (may be represented by red dot - not shown) |
| | **support/compliance** ("other" or "green") (may be represented by green dot - not shown) |

Top 10 KPIs with highest commercial value for sales (*based on customer behaviour, market dynamics, competitive position & audit impact*)

| **Rank** | **KPI** | **Why important for sales?** | **Priority** |
|---|---|---|---|
| 1 | **Premium versus coverage** (Value for Money) | Customers intensively compare price and what they get in return. | **high** |
| 2 | **Customer satisfaction & service quality** | Reviews, word of mouth and retention depend heavily on this. | **high** |
| 3 | **Cover for damage to own vehicle** | Important decision criterion in casco/all-risk - determines comfort level. | **high** |
| 4 | **Flexibility of the policy** | Ability to adjust= greater conversion potential. | **high** |
| 5 | **Own risk / indemnity** | Transparency on this prevents drop-off moments during sales calls. | **high** |
| 6 | **Fast claims handling** | Crucial in customer choice - "What if I really have a claim?" | **high** |
| 7 | **Add-on options (such as electronics, extra cover)** | Upsell moment and differentiation point. | **high** |
| 8 | **Natural catastrophe cover / ESG cover** | Increasingly important in property insurance - trend-sensitive. | **high** |
| 9 | **Benchmark of premium against competitors** | Needed in every sales conversation: how are we doing compared to the rest? | **high** |
| 10 | **Burglary & theft cover** | Especially relevant with home and car insurance - emotional trigger. | **high** |

• Medium priority ("medium") - supporting commercial KPIs

| **KPI** | **Why important?** |
|---|---|
| Green energy & sustainability | Important segment, but not decisive with everyone |
| Claims ratio | Internal validation - not directly customer-driven |
| Exclusions | Transparency helps sales, but not always decisive |
| Glass insurance & roadside assistance | Good as differentiator when pricing is equal |
| Premium level by vehicle type | Segment-oriented - depends on lead source |

• **Compliance-driven or low commercial impact**

| **KPI** | **Primary objective** |
|---|---|
| Legal compliance (FSMA, ESG obligations) | Compliance, not sales |
| Insurer solvency ratio | Important, but abstract for most clients |
| Loss of rental income, water damage, etc. | Niche users, less impact on broad sales |
| Assessment of claims process by agent | Internal optimisation |

To **achieve the best sales,** when creating reports, campaigns or sales advice, focus on:
- The **Top 10 KPIs** above
- Make sure **the perception of "value for money"** is central
- Use **customer-centric language** and offer **clear, comparable coverage tables** to

Rank: key KPIs per insurance product.

*Maximise sales and customer satisfaction.*

### Car insurance

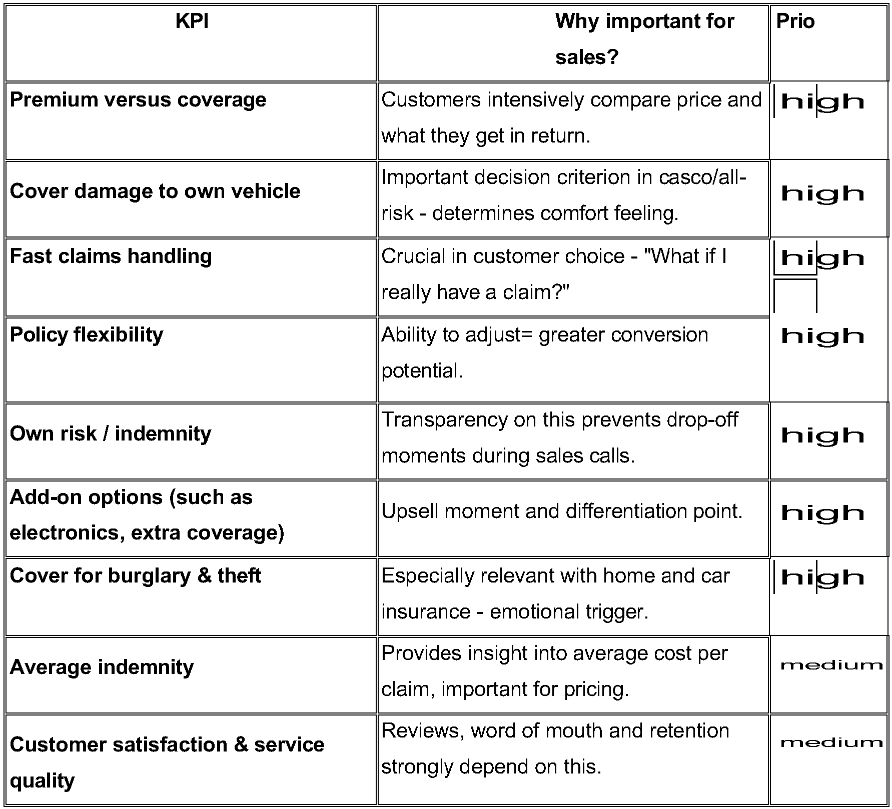

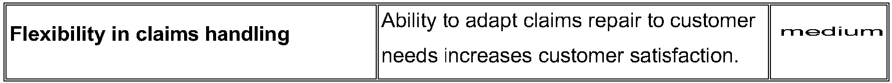

### Fire insurance

| **KPI** | | **Why important for sales?** | **Prio** |
|---|---|---|---|
| **Premium versus coverage** | Customers intensively compare price and what they get in return. | | **high** |
| **Coverage in case of natural disasters** | Increasingly important in property insurance - trend-sensitive. | | **high** |
| **Fast claims handling** | Crucial in customer choice - "What if I really have a claim?" | | **high** |
| **Policy flexibility** | Ability to adjust= greater conversion potential. | | **high** |
| **Own risk / indemnity** | Transparency on this prevents drop-off moments in sales calls. | | **high** |
| **Add-on options (such as loss of rental income, water damage)** | Upsell moment and differentiation point. | | **high** |
| **Fire and smoke damage cover** | Basic coverage that is essential for customers. | | **high** |
| **Cover in the event of burglary & theft** | Important for customers who own valuable possessions. | | medium |
| **Customer satisfaction & service quality** | Reviews, word of mouth and retention depend heavily on this. | | medium |
| **Average compensation** | Provides insight into the average cost per claim, important for pricing. | | medium |

### Legal expenses insurance

| **KPI** | | **Why important for sales?** | **Prio** |
|---|---|---|---|
| **Premium versus coverage** | Customers intensively compare price and what they get in return. | | **high** |
| **Coverage for legal disputes** | Important for customers at risk of legal disputes. | | **high** |
| **Fast claims handling** | Crucial in customer choice - "What if I really need legal help?" | | **high** |
| **Policy flexibility** | Ability to customise= greater conversion potential. | | **high** |
| **Own risk / indemnity** | Transparency on this prevents dropouts during sales calls. | | **high** |
| **Add-on options (such as help with contracts, labour disputes)** | Upsell moment and differentiation point. | | **high** |
| **Criminal assistance cover** | Essential for clients at risk of criminal prosecution. | | medium |
| **Average compensation** | Provides insight into average cost per claim, important for pricing. | | medium |
| **Customer satisfaction & service quality** | Reviews, word of mouth and retention depend heavily on this. | | medium |
| **Tax litigation coverage** | Relevant for clients with complex tax situations. | | medium |

### Audit: market analysis | audit file

*B-score, inflation, premium development for Civil Liability*

Audit report - Civil Liability (Benchmark Premiums)

### Time Series Overview (N-5 to N+1)

| **Year** | **Premium (€)** | **Real inflation (%)** | **B-score** |
|---|---|---|---|
| N-5 | 245 | - | * |
| N-4 | 250 | -0,8 | A9 |
| N-3 | 260 | 1,2 | B39 |
| N-2 | 280 | 4,9 | B2 |
| N-1 | 300 | 4,3 | B8 |
| N | 330 | 7,2 | C29 |
| N+1 | 370 | 9,3 | C8 |

### Evolution of premium amounts

The premium for **Civil Liability** cover has increased sharply in recent years:
- From **€245 (N-5)** to **€370 (N+1),** representing **a +51%** increase over 7 years.
- Especially between **N and N+1,** there is a notable increase of **€40** (+12%).

### Inflation correction

- Real inflation rose from -0.8% in N-4 to **9.3% in N+1.**
- The years N-2 to N+1 show a strong inflationary environment, which explains the premium indexation.
- Nevertheless, the increase in premiums has been faster than inflation, which may reflect **market corrections, reinsurance pressure,** or **increased claims burden.**

### Analysis of B-score (quality, stability or market position)

- The B-score downgraded from **A9 (N-4)** to **C8 (N+1).**
- This implies a deterioration in benchmark position or performance indicators, despite the higher premium.
- The peak "B2" in N-2 indicates a temporary improvement in quality, but it was not sustainable.

### Core observations

1. **Sharply rising premiums,** faster than inflation - may put pressure on competitive position.
2. **Decrease in B-score** - a signal that the increase in premium may not have been accompanied by an increase in assurance quality or efficiency.
3. **Break in trend since N-3** - from then on, B-score worsens with simultaneous premium increase.
4. **Outlook N+1** shows no reversal - premium rises again with even
   lower score.

### Conclusion and audit opinion

The **Civil Liability** guarantee shows a clear **cost increase** and **quality erosion according to the B-score.** In an audit context, it would be advised to:
- **Further track cost evolution** against competition and market averages.
- Monitor **customer satisfaction and product returns** in relation to these price increases.
- Review **insurance conditions and coverage** to assess whether the product is still balanced in terms of value for money.

Audit report - Legal Aid (Benchmark Premiums)

### Time series Overview (N-5 to N+1)

| **Year** | **Premium (€)** | **Real inflation (%)** | **B-score** |
|---|---|---|---|
| N-5 | 45 | - | * |
| N-4 | 47 | 1,6 | B35 |
| N-3 | 50 | 3,6 | B15 |
| N-2 | 53 | 3,2 | B19 |
| N-1 | 57 | 4,7 | B4 |
| N | 60 | 2,5 | B26 |
| N+1 | 62 | 0,5 | B46 |

### Evolution Premium amounts

- Premium increases from **€45 (N-5) to €62 (N+1)→ +37.8%** in 7 years.
- Moderate growth relative to inflation: indexation appears proportional and market-based.

### Inflation correction

- Inflation peaked between **N-3 and N-1,** then weakening.
- Premium increases fairly neatly follow this movement, without excessive deviation.

### Analysis of B-score

- B-scores remain consistent within **category B** (between B4 and B46).
- No extreme outliers or deterioration.
- Slight recovery noticeable in **N+1** vs **N** → from B26 to B46.

### Core observations

1. **Premium growth is moderate,** parallel to inflation.
2. **Stable B scores,** with no deterioration → good product balance.
3. **Slight improvement in N+1** in terms of value perception (B46).
4. No cause for concern in terms of value for money.

### Conclusion and audit opinion

Legal aid remains a **stable safeguard,** well aligned with inflation and without major fluctuations in B-score.

Audit advice: **maintain as is,** but further optimisation can be done through **customer-focused innovation** (e.g. digitisation of claims management).

### Audit report - Multirisk (Benchmark Premiums)

### Time series Overview (N-5 to N+1)

| **Year** | **Premium (€)** | **Real inflation (%)** | **B-score** |
|---|---|---|---|
| N-5 | 235 | - | * |
| N-4 | 237 | -1,9 | A20 |
| N-3 | 239 | -2,0 | A21 |
| N-2 | 240 | -2,4 | A25 |
| N-1 | 245 | -0,7 | A8 |
| N | 250 | -0,8 | A9 |
| N+1 | 255 | -0,8 | A9 |

### Evolution Premium amounts

- Minimum increase: **+8.5%** over 7 years.
- Premium adjusts slowly: only €20 increase over long term.

### Inflation adjustment

- All inflation rates are **negative→** deflationary period for multirisk.
- Yet premium rises: slight **mismatch** between price and economic context.

### Analysis of B-Score

- B-scores remain **firmly in the A-category** → strong product perception.
- Stability of score since N-1 shows that increases are well digested by the market.

### Core observations

1. **Premium increase despite negative inflation→** indicates market positioning.
2. **High B-score (A9-A25)**→ well-rated product.
3. **Low volatility→** few fluctuations in value perception.

### Conclusion and Audit Opinion

Multirisk is very **favourably valued** in the market. The limited premium adjustment in a deflationary context is **defensible** given the high B rating. Audit recommendation: **maintain product structure,** but remain alert to impact of external risks such as climate damage.

Audit report - Material Damage (Benchmark Premiums)

### Time series Overview (N-5 to N+1)

| **Year** | **Premium (€)** | **Real inflation (%)** | **B-score** |
|---|---|---|---|
| N-5 | 335 | - | * |
| N-4 | 337 | -2,2 | A23 |
| N-3 | 339 | -2,2 | A23 |
| N-2 | 340 | -2,5 | A26 |
| N-1 | 345 | -1,3 | A14 |
| N | 350 | -1,4 | A15 |
| N+1 | 355 | -1,4 | A15 |

### Evolution of premium amounts

- Increase from **€335→ €355** over 7 years = **+6%,** very limited.
- Year-on-year adjustment each time ±€2-5, consistent with slightly negative inflation.

### Inflation adjustment

- Inflation negative since N-4 → market context of price pressure.
- Premiums rise despite deflation: probably needed for claims coverage.

### Analysis of B-score

- B-scores remain **consistent around A14-A26→** very positive market perception.
- Score remains stable between N-1 and N+1 (A14→ A15 → A15)→ no alarm signals.

### Core observations

1. **Slight price rise** despite deflation→ vigilant but understandable.
**2. Stable A-score** indicates strong customer satisfaction and/or good coverage.

### 3. Long-term product consistency.

### Conclusion and audit opinion

The **Property Damage** Guarantee is a **strongly positioned product** that manages to maintain its **quality** despite limited price adjustments.

Audit recommendation: retain, but monitor whether rising claims costs may require **substantial price adjustments** in the future.

### Comprehensive audit report

*This report combines price*/*guarantee differences, relevance, fuel types, the number of hits*/*ratings, weightings and the final score.*

### Audit report - Analysis of Auto Insurance Proposals

### 1. Purpose of the audit

The audit evaluates insurance proposals based on:
- Deviation in price and guarantee value (positive or negative),
- Relevance of guarantees (e.g. mandatory, necessary, recommended),
- Type of fuel of the vehicle,
- Number of hits (how often a proposal appears),
- Overall weighting (importance or impact of the proposal),
- Final score and categorisation into labels A, B, C or D.

Overview by label category

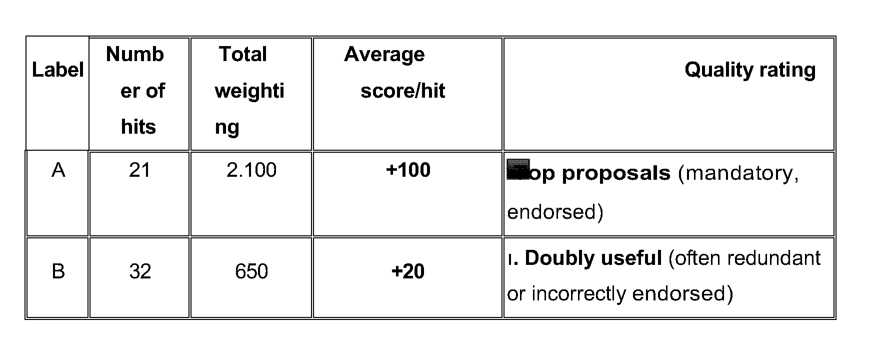

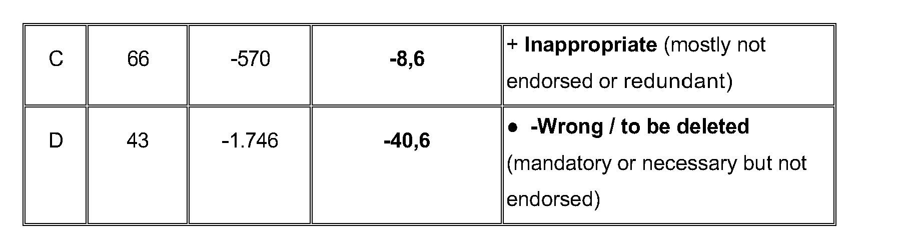

### Key observations by category

### Category-Label A - Mandatory & endorsed (VO)

- Consists mainly of safeguards that are essential and were correctly selected.
- Includes vehicles with a good relationship between price and warranty (price decrease+ warranty increase).
- Typical for electric vehicles or LPG users.
- Very positive scoring: average of **+100 per hit.**

### Conclusion:

These are the models and proposals that should be retained as a priority or used as a benchmark.

### Category-Label B - Doubtful added value

- Many proposals have a slight bias in price or guarantee, but with no clear added value.
- Often proposed "nice to have" or even "delete" but endorsed anyway (FO/DNO).
- Frequently occurs with hybrid vehicles.

### Conclusion:

Slight overrides or unnecessary safeguards. Recommended for critical review.

*+ Category Label C - Negative contribution (poorly endorsed or unnecessary).*
- Most proposals are incorrectly endorsed or completely irrelevant (e.g. 'nice to have' without endorsement).
- Strong negative impact on overall score (e.g. -420 for ANO= "recommended but not endorsed").

### Conclusion:

Belongs to the models/proposals to be deleted. Here, money is potentially wasted or coverage is misjudged.

### • -Category-Label D - Serious errors

- Contains the most severely negative proposals such as:
   ∘ Mandatory but not endorsed (UNO),
   ∘ Necessary but not endorsed (NNO),
   ∘ Diesel models with strong deviations in price and value.
- Overall score extremely negative, with an average of **-40.6 per hit.**

### Conclusion:

These proposals are **structurally flawed.** They misrepresent necessary safeguards and pose risks. Immediate revision/removal recommended.

Insights based on fuel type
- **Electric (ELE)** and **LPG** score strongly in category A, with positive price-to-value ratio.
- **Hybrid (HBE and HDI)** is mainly in category B - often questionable value for money.
- **Petrol (BEN)** appears at C - especially in situations where one does not tune well to need.
- **Diesel (DIE)** scores heavily negative in D - points to structural misjudgements of safeguards in this group.

Final score and overall assessment
- **Total number of proposals evaluated:** 167
- **Total number of scores/rating values:** 217
- **Score Rating vs. Number of Hits: 76.96% utilised**
- **Overall weighted score: +21**

### Interpretation:

Despite a strong performance in category A, this is more than offset by weak proposals in C and especially D. The net score of **+21 is much lower than the potential,** given the wide dispersion and negative outliers.

### Recommendations

1. **Retain and strengthen proposals in category A.** These are your flagships.
2. **Thoroughly clean up B and C.** Set a guideline to avoid anything that is not at least "necessary
   + endorsed" is avoided.
3. **Review all D proposals individually.** Obligations that were erroneously not underwritten **pose a contractual risk** in particular.
4. **Use fuel type as filter criterion.** Some types (e.g. diesel) apparently require a different approach or training of consultants.
5. **Make selection based on relevant price and value changes.** Large negative deviations without guarantee increase = alarm signal.

### Example 6: sixth example embodiment according to the invention

This example is essentially the same as Examples 4 and 5, with a plurality of AI agents being provided via an advanced architecture with 4 components and a middleware layer. However, different from Example 4 and 5, the AI audit agent plays a central role.

In this example, the plurality of AI agents includes all AI agents of Examples 4 and 5. In variants of this example, not all AI agents are included.

Particularly, this example focuses on aspects of labelling, structure and compliance architecture, and may be considered as variant embodiments of everything disclosed in this document, and particularly of what is disclosed in Example 4 and 5.

The example provides a uniform way to label and structure all AI agents, with the Audit Agent of Example 5 as the central guiding and coordinating entity.

### Evolution of the Aida system: from Trackers & Tracers to Supervisors & Advisors

Reference structure (different from this example, but equally disclosed):
- Trackers & Tracers: agents that tracked and traced specific signals respectively
- Audit-Agent as a separate entity

Structure of this example (Example 6):
- Audit-Agent as central orchestrator of all processes
- Restructuring into two main groups:
- Supervisors
- Advisors (AI Agent Bosses)

Such structure brings a clear functional separation that better reflects a core vision: compliance automation, niche advisory and real-time audit readiness.

Thereby, it is noted that the shift from Trackers C Tracers to Supervisors C Advisors has no impact on the internal workflow or development methodology around these agents. The operational flow, integration methodologies and underlying AI architecture may be the same as, e.g., in Example 4 and 5. The change is essentially a content refinement and positioning.

### Functional Roles of the AI Agents

### Supervisors

These agents have a supervisory role and focus on frequent monitoring, follow-up, assessment and auditing of companies and organisations in various domains. They operate on the basis of predefined KPIs and guidelines. The application areas are:
- Insurance
- Banking & Financial Services
- Accounting & Taxation
- Property
- HR & Payroll
- Legal & Legal Affairs

### Advisors - AI Agent Bosses (Niche Agents)

These are tailor-made AI agents who act as **niche compliance auditors.** They support internal staff as well as external clients of the relevant sectors. Each Advisor performs automated audits based on domain-specific regulations and policies.

The breakdown is as follows:

| **Niche** | **AI Custom Advisor for** |
|---|---|
| **INSURANCE** | Brokers, bankers, insurers |
| **FINANCIAL SERVICE** | Bankers, asset managers, brokers |
| **REAL ESTATE** | Real estate agents, developers |
| **HR & PAYROLL** | Social secretariats, personnel services |
| **NOTARY** | Notaries, deeds administrators |
| **LEGAL** | Lawyers, lawyers |
| **ACCOUNTANCY** | Bookkeepers, tax specialists |

### The unified audit flow

To enable rapid scalability and measure KPIs consistently, all our agents - regardless of their type or niche - follow a fixed workflow on every call. This unified **AI Audit Flow** is essential for integration into dashboards, generating audit reports and ensuring consistency in compliance assessments.

### Standard Al Audit Flow

**Prompt / Query**
   - A user query or command or triggered event
**Score / Labelling**
   - Assessment according to a fixed scale: **A, B, C or D**
**Report**
   - Choice of:
      - **Simple report** (visual, concise)
      - **Complex report** (with context and rationale)
      - **Full audit report**
**Metrics**
   - Automatic import of key figures into dashboards and application
   - Possibility of alerts, recommendations or actions

### Compliance, transparency & scalability

**The** structure of this example (Example 6) enables:
- **Serving new niches faster** without designing new logic
- **Increase transparency** through consistent labelling
- Ensuring **policy compliance** through automatic audit modules
- Providing **real-time insights** to employees, customers and regulators

### Vision for the future: Aida as an Ecosystem

The structure of this example (Example 6) allows to build Aida into a scalable ecosystem of AI agents, where:
- Each niche agent as a 'plug-in' works within the central structure
- Customers can plug in their own compliance guidelines
- Metrics real-time contributions to sector benchmarks
- New KPIs easily added via flow expansion

### On the rating system

In this document, examples with rating system based on a plurality of sub-ratings are disclosed, e.g., 20 sub-ratings, or 200 sub-ratings. The system with 20 sub-ratings may relate, e.g., to an initial rating methodology. The system with 200 sub-ratings, on the other hand, may relate to several cases and application examples of a refined rating system. Further rollout of the Aida system according to this example (Example 6) is based on this expanded and refined structure. It may enable a deeper and more nuanced audit and scoring methodology. It may advantageously allow finer granularity, higher reliability and better integration with sectoral standards.

(End of example 6)

## Claims

1. A computer-implemented method for real-time querying of information regarding physical entities, the method comprising the steps of:
- receiving (3) a query comprising an identification of at least one technical feature;
- extracting (4), from said query, said identification of said at least one technical feature;
- generating (6), from a trained AI model (5) being trained based on training data comprising physical entity data (7) relating to a plurality of physical entities each associated with one or more features including said same technical feature, structured output data (8); said structured output data (8) comprising a selection of one or more respective physical entities along with respective scores indicative of an association between said same feature and the respective physical entity;
- calculating (9), based on said structured output data, a result (1, 2) comprising at least said selection of physical entities along with their respective scores;
wherein the AI model (5) being trained relates to anonymizing and vectorizing physical entity data (7) into a plurality of vectors; and
wherein the generating of the structured output data (8) from said trained AI model (5) relates to matching of the identification of the technical feature comprised in the query with the plurality of respective vectors based on similarity between said identification and one or more entries in the respective vectors.

2. The method of claim 1, further comprising the steps of:
- extracting (13), from said physical entity data (7), a plurality of physical entities comprising personal information;
- pre-processing (14) said plurality of physical entities for obtaining anonymized physical entity data (15) comprising a plurality of anonymized physical entities;
- adding, as part of said training of said AI model (5), said plurality of anonymized physical entities to said training data;
- **preferably**, training said AI model based on said training data.

3. The method of claim 2, wherein the pre-processing (14) relates to introducing at least one pseudonym so that the plurality of anonymized physical entities remains searchable with respect to said at least one pseudonym.

4. The method of any of claims 1-3, wherein said querying of information relates to any one domain or any combination of domains of: insurance, real estate, financial services, hr & payroll, legal, notarial and accounting.

5. The method of claim 4, wherein the AI model comprises at least two AI submodels relating to at least two AI agents;
wherein the at least two AI agents are at least two of any of: an insurance AI agent, a real estate AI agent, a financial services AI agent, an hr & payroll AI agent, a legal AI agent, a notarial AI agent, an accounting AI agent, an audit AI agent; and
wherein the AI model (5) is configured for multi-agent reinforcement learning involving jointly optimizing respective reward functions for each of said at least two AI agents.

6. The method of any of claims 1-5, wherein the generating (6) of the structured output data (8) relates to retrieval augmented generation, RAG, with retrieval from at least the AI model (5) followed by generation conditioned by the retrieved information.

7. The method of any of claims 1-6, wherein the matching based on said similarity relates to a similarity metric involving a knowledge graph comprising a plurality of edges and a plurality of nodes, wherein said matching comprises determining which edges and/or nodes are relevant, and wherein said similarity metric is calculated based at least partly on coefficients associated with respective edges and/or nodes that are deemed relevant.

8. The method of claim 6 or claim 7, wherein the retrieval comprises retrieval from a knowledge graph comprising a plurality of edges and a plurality of nodes, wherein the matching based on said similarity relates to a similarity metric involving said knowledge graph through said RAG, wherein said matching comprises determining which edges and/or nodes are relevant, and wherein said similarity metric is calculated based at least partly on coefficients associated with respective edges and/or nodes that are deemed relevant.

9. The method of any of claim 1-8, wherein the physical entities and the query consist of respective images; wherein **preferably** the extracting (4) of said identification from said query relates to, for each image:
- media-to-text generation, preferably alt text generation, for obtaining said at least one technical feature comprising a text string, and wherein said vectors comprise at least one entry formatted as text.

10. The method of claim 9, wherein the result (1,2) relates to image-only output.

11. The method of any of claims 1-10, wherein said anonymizing relates to encryption relying on at least one of: RSA, Diffie-Hellman, PGP, and ECDSA.

12. The method of claim 11, wherein the pre-processing (14) relates to encrypting of at least one pseudonym introduced so that the plurality of anonymized physical entities remains searchable with respect to said at least one encrypted pseudonym.

13. The method of any of claims 1-12, wherein the extracting (4) of the identification of the technical feature from the query is based on an LLM, **preferably** both the receiving (3) and the extracting (4) according to an interaction with a user, and wherein **preferably** the generating (6) of the structured output data (8) relates to retrieval augmented generation, RAG based on said LLM, with retrieval from at least the AI model (5) followed by generation conditioned by the retrieved information.

14. A device (10) for real-time querying of information regarding physical entities, the device comprising:
- a network interface configured to receive (3) a query comprising an identification of at least one technical feature;
- an extraction module configured to extract (4), from said query, said identification of said at least one technical feature;
- a memory module storing a trained AI model (5), the trained AI model having been trained on physical entity data relating to a plurality of physical entities each associated with one or more features including said technical feature;
- a generation module configured to generate (6), from the trained AI model, structured output data (8) comprising a selection of one or more respective physical entities and respective scores indicative of an association between said technical feature and each selected physical entity;
- an output interface for connecting to a calculation module configured to calculate (9), based on the structured output data (8), a result (1, 2) comprising at least said selection of physical entities along with their respective scores;
wherein the AI model (5) being trained relates to anonymizing and vectorizing physical entity data (7) into a plurality of vectors; and
wherein the generating of the structured output data (8) from said trained AI model (5) relates to matching of the identification of the technical feature comprised in the query with the plurality of respective vectors based on similarity between said identification and one or more entries in the respective vectors.

15. A system (100) for real-time querying of information regarding physical entities, the system (100) comprising:
- a system input interface;
- the device (10) of claim 14, the device comprising an output interface and a trained AI model (5) trained based on training data;
- a calculation module configured to connect to said output interface and configured to calculate (9), based on structured output data (8), a result (1, 2) comprising at least a selection of physical entities along with their respective scores;
- a system extraction module for extracting (13), from physical entity data (7) provided to the system via the system input interface, a plurality of physical entities comprising personal information;
- a pre-processing module for pre-processing (14) said plurality of physical entities for obtaining anonymized physical entity data (15) comprising a plurality of anonymized physical entities;
- a training data interface for adding, as part of said training of said AI model (5), said plurality of anonymized physical entities to said training data.
- **preferably**, a user interface module configured to output, preferably via a GUI, the result (1,2).
